# EUROPEAN PATENT SPECIFICATION

(11) **EP 3 293 047 B1**
(45) Date of publication and mention of the grant of the patent: **16.10.2019**
(21) Application number: 17001409.6
(22) Date of filing: 18.08.2017
(51) Int. Cl.: B60P 3/08

(54) **SYSTEM FOR LIFTING THE LOADING PLATFORM AND VEHICLE FOR TRANSPORTING MOTOR VEHICLES EQUIPPED WITH SUCH SYSTEM FOR LIFTING THE LOADING PLATFORM**
SYSTEM ZUM HEBEN DER LADEFLÄCHE UND FAHRZEUG ZUM TRANSPORTIEREN VON KRAFTFAHRZEUGEN MIT DIESEM SYSTEM ZUM HEBEN DER LADEFLÄCHE
SYSTÈME PERMETTANT DE SOULEVER UNE PLATE-FORME DE CHARGEMENT ET VÉHICULE DE TRANSPORT DE VÉHICULES À MOTEUR ÉQUIPÉS D'UN TEL SYSTÈME POUR SOULEVER LA PLATE-FORME DE CHARGEMENT

(30) Priority: 09.09.2016 IT 201600091021
(43) Date of publication of application: 14.03.2018
(73) Proprietor: Rolfo S.p.A., 12042 Bra (CN) (IT)
(72) Inventor: Arnulfo, Elio, I-12042 BRA (CN) (IT)
(74) Representative: Garavelli, Paolo

(56) References cited:
- EP-A1- 2 248 702
- DE-A1- 10 127 739
- DE-U1-202007 006 677

## Description

The present invention refers to a system for lifting the loading platform and to a vehicle for transporting motor vehicles equipped with such system for lifting the loading platform.

In particular, the present invention refers to a vehicle for transporting motor vehicles or vehicle transporter and to its related system for lifting the upper loading platform.

Known systems for lifting the loading platform for vehicles for transporting motor vehicles can be divided into two types: systems with articulated arms, in which the loading platform is generally moved through hydraulic cylinders, and system with fixed columns, in which the loading platform is generally moved by kinematisms of the "worm screw - nut screw" type.

These systems have both advantages and disadvantages in terms of actuation speed, which is greater for systems with articulated arms, of working stroke, weight, stiffness and transverse stability, which are advantageous for systems with fixed columns.

With the increase of the width of cars and Light Commercial Vehicles (LCV) which have to be transported, it becomes of major importance to have the maximum width available above the loading lane for the passage of vehicles and for opening their doors: from this point of view, the systems with fixed columns are disadvantageous; on the other hand, the systems with articulated arms are disadvantageous as regards their longitudinal encumbrance, creating more problems regarding the door opening of vehicles transported on the lower plane of the vehicle for transporting motor vehicles.

Document EP-A1-2 248 702 discloses a lifting system according to the preamble of Claim 1.

Object of the present invention is solving the above problems of both types of prior art lifting systems of the loading platform, by providing a vehicle for transporting motor vehicles equipped with a system for lifting the loading platform and a system for lifting its related loading platform, which have a column which has the same working stroke of the system with fixed columns, and a reduced longitudinal and vertical encumbrance.

The above and other objects and advantages of the invention, as will appear from the following description, are obtained with a system for lifting the loading platform and a vehicle for transporting motor vehicles equipped with such system for lifting the loading platform as claimed in the respective independent claims. Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example, with reference to the enclosed drawings, in which:
- Figure 1 is a side view of a system for lifting the loading platform according to the present invention;
- Figure 2 is a perspective view of a vehicle for transporting motor vehicles equipped with a system for lifting the loading platform according to the present invention;

- Figure 3 is a side view of a vehicle for transporting motor vehicles equipped with a system for lifting the loading platform according to the present invention;
- Figure 4 is a side view of a system for lifting the loading platform according to the present invention;
- Figure 5 is a side view of a system for lifting the loading platform according to the present invention; and
- Figure 6 is a side view of a system for lifting the loading platform according to the present invention.

With reference to the Figures, a preferred embodiment of the system for lifting the loading platform and of the vehicle for transporting motor vehicles equipped of such lifting system of the present invention is shown and decribed. It will be immediately obvious that numerous variations and modifications (for example related to shape, sizes, arrangements and parts with equivalent functionality) can be made to what is described, without departing from the scope of the invention, as appears from the enclosed claims.

The system 10 for lifting the loading platform 20 of the vehicle for transporting motor vehicles of the invention comprises a column 15 comprising a fixed part 11 connected, for example bolted, to a chassis 14, and a moving part 12 assembled sliding on the fixed part 11, preferably on first guiding means 18, and adapted to vertically translate by sliding inside the fixed part 11.

The moving part 12 is actuated by first actuating means 16, for example comprising a first hydraulic cylinder 16, preferably assembled outside the moving part 12 and having a first end connected to the fixed part 11 and a second end connected to the moving part 12.

The system 10 for lifting the loading platform of the vehicle for transporting motor vehicles of the invention further comprises a loading platform support 21 assembled sliding on the moving part 12, preferably on second guiding means 28, and adapted to vertically translate by sliding inside the moving part 12.

The loading platform support 21, for example composed of a cylindrical pin, is adapted to be connected to the loading platform 20 and is actuated by second actuating means 26 connected to the moving part 12 and by third actuating means 27 connected to the loading platform support 21 and associated with the second actuating means 26.

Preferably, the third actuating means 27 have a first end connected to the loading platform support 21 and a second end connected to the moving part 12, and the second actuating means 26 have a first end connected to the moving part 12 and a second end connected to a first pulley support 19.

Preferably, the second actuating means comprise a second hydraulic cylinder 26 and the third actuating means 27 comprise a chain 27 adapted to actuate the loading platform support 21, for example a chain with double pull, and related first pulley 22 and second pulley 23 which are rotatably connected respectively to the first pulley support 19 and to a second pulley support 29, in turn connected to the moving part 12.

In a preferred way, the second hydraulic cylinder 26 has a first end connected to the second pulley support 29 and a second end connected to the first pulley support 19, and the chain 27 has a first end connected to the loading platform support 21 and a second end connected to the moving part 12.

In this configuration, the chain 27 passes around the first pulley 22, connected to the first pulley support 19, and to the second pulley 23 connected to the moving part 12, and preferably to the second hydraulic cylinder 26, in order to double the stroke of the loading platform support 21 with respect to the stroke of the second hydraulic cylinder 26.

Preferably, the loading platform support 21 is associated with the moving part 12 by means of a rack 24 to allow the free rise of the loading platform support 21, while the descent is allowed only through the actuation of an unlocking element, composed for example by a small pneumatic cylinder adapted to lift a hook to disengage it from the rack.

Preferably, a rope is applied to the loading platform support 21, synchronized with the chain 27 and adapted to act in the opposite direction to the one for lifting the loading platform 20, to oppose the vertical load in the situations in which the vertical load on the loading platform support 21 is reversed, tending to lift it.

In an alternative embodiment of the system 10 for lifting the loading platform of the invention, the chain 27 can be replaced by a rope.

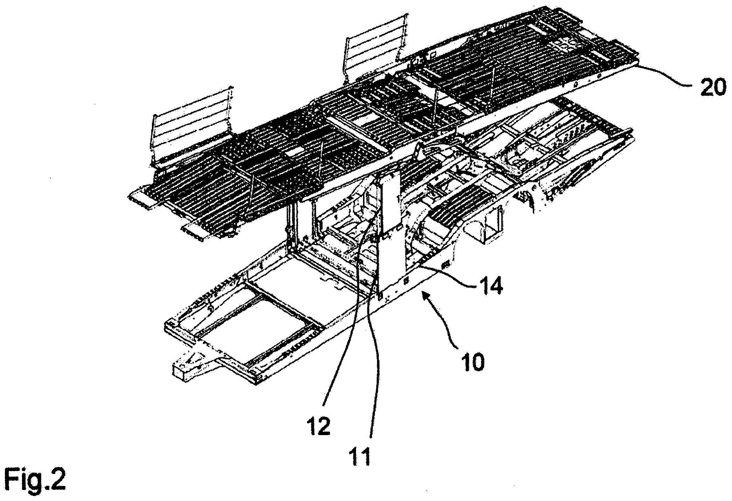

The preferred embodiment of the vehicle for transporting motor vehicles equipped with the system 10 for lifting the loading platform of the invention is the one which provides for the presence of two systems 10, and therefore of two columns 15, on the two sides of the loading platform 20, next to the front lifting position of the loading platform 20, as shown in Figure 2.

Other embodiments are possible, in which the columns are arranged in other positions.

The operation of the system 10 for lifting the loading platform according to the present invention will now be described.

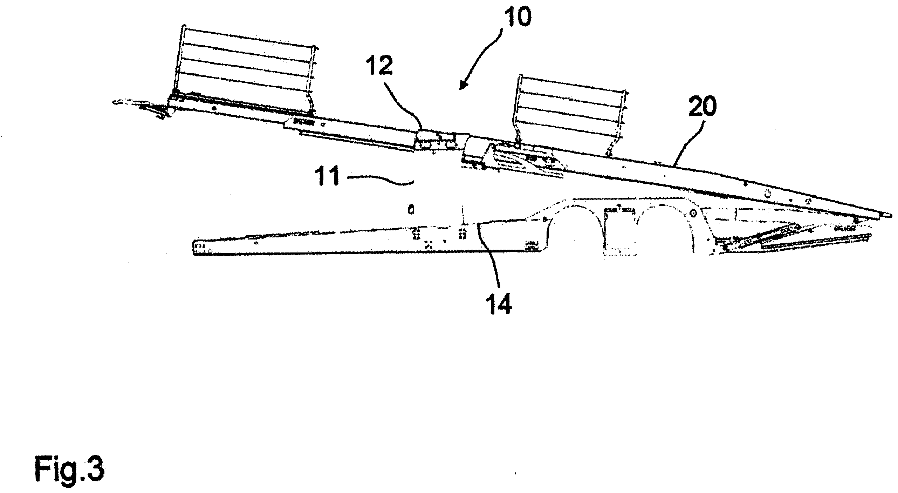

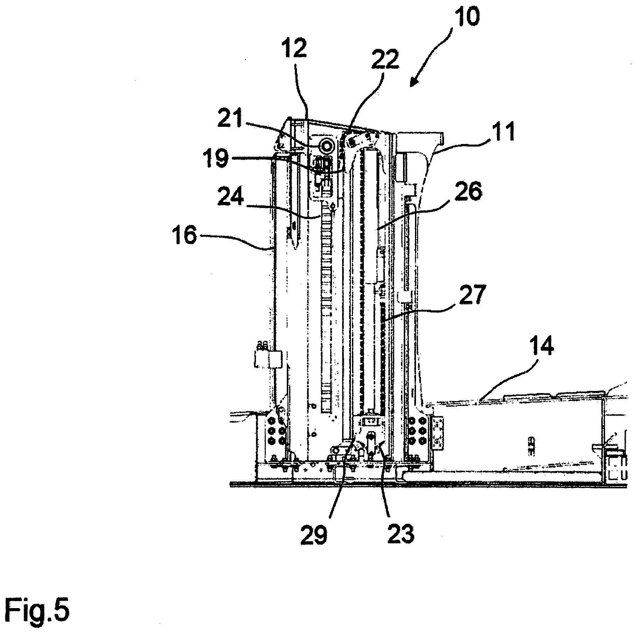

In the embodiment of the system 10 for lifting the loading platform of the invention, which provides the columns 15 next to the front lifting position of the loading platform 20, with the loading platform 20 in the loading ramp position shown in Figure 3, the column 15 is completely below the loading plane of the loading platform 20, allowing to use its complete width, as can be seen in Figures 3 and 5.

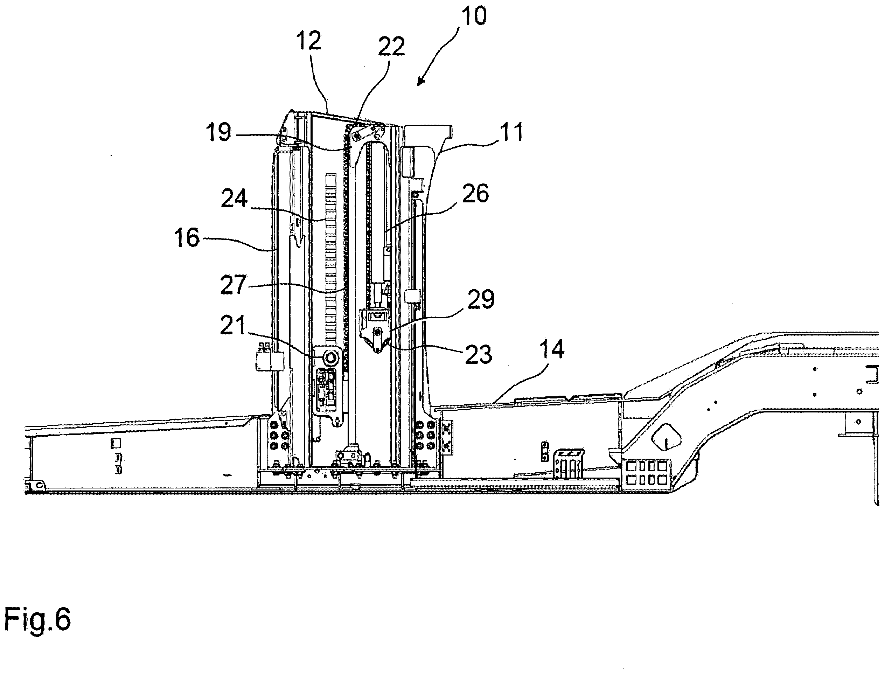

A second position is provided, in which the loading platform 20 is lowered on the front, for example to load vans with high roof; in this position, the loading platform support 21 is lowered in the lower position shown in Figure 6, the moving part 12 of the column 15 is inside the fixed part 11, and the columns 15 will project above the lane of the loading platform 20.

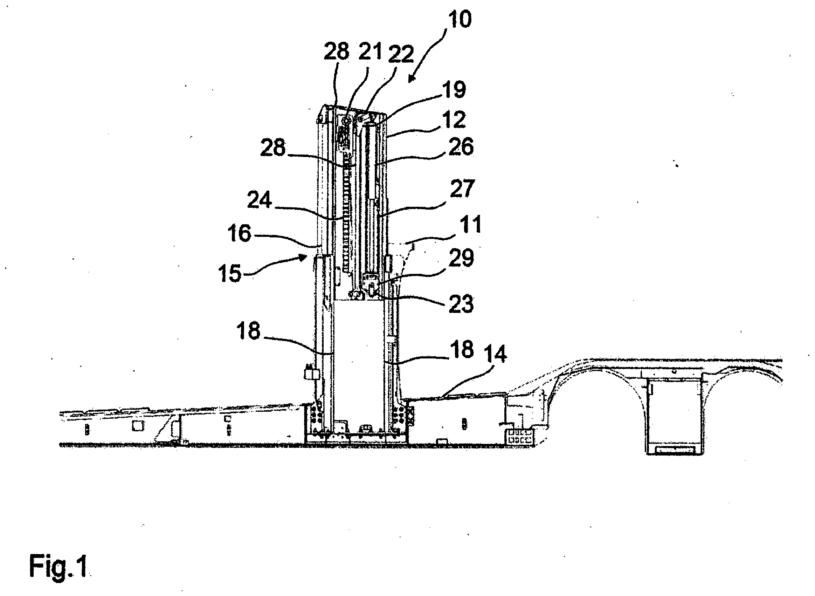

The loading platform 20 must further be able to be lifted over the ramp position, as shown in Figure 2, in which the loading platform support 21 is in the topmost position shown in Figure 1, in which the moving part 12 of the column 15 is moved vertically upwards, outside the fixed part 11, to allow the passage of a vehicle on the lower plane.

In this way the stroke of the second cylinder 26 is doubled by the system of chain 27 and pulleys 22, 23, allowing the extreme positions of the first pulley support 19 within the overall sizes of the moving part 12, shown in Figures 5 and 6.

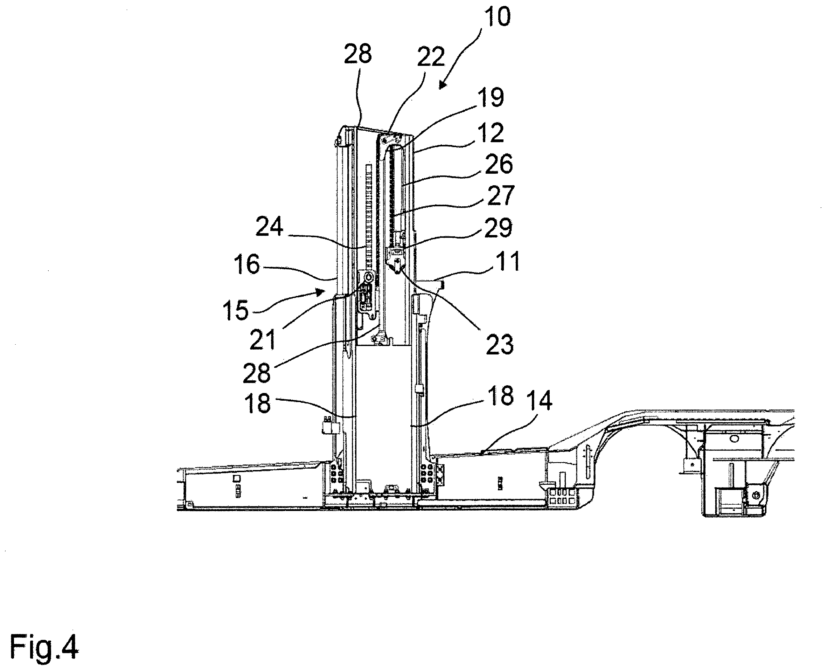

The extreme positions of the two movements composed of the moving part 12 and the first pulley support 19 are shown in Figures 1, 4, 5 and 6.

Obviously, all intermediate combinations of the two movements are possible.

Advantageously, the vehicle for transporting motor vehicles and the system for lifting the loading platform of the present invention allow using the complete width of the loading platform for loading vehicles when the loading platform is in the loading ramp position and the column is completely below the loading plane of the loading platform, with the moving part inside the fixed part.

Advantageously, the system for lifting the loading platform of the invention allows having reduced overall sizes longitudinally, though having a high working stroke.

## Claims

1. System (10) for lifting the loading platform (20) of a vehicle for transporting motor vehicles comprising:
- a column (15) comprising a fixed part (11) connected to a chassis (14) and a moving part (12) assembled sliding on the fixed part (11) and adapted to vertically translate actuated by first actuating means (16);
- a loading platform support (21) connected to the loading platform (20), said loading platform support (21) being assembled sliding on the moving part (12) and adapted to vertically translate actuated by second actuating means (26) and by third actuating means (27) associated with the second actuating means (26);
**characterized in that** the third actuating means comprise a chain (27) adapted to actuate the loading platform support (21) and related first pulley (22) and second pulley (23).

2. System (10) for lifting the loading platform (20) of a vehicle for transporting motor vehicles according to claim 1, **characterized in that** the third actuating means (27) have a first end connected to the loading platform support (21) and a second end connected to the moving part (12).

3. System (10) for lifting the loading platform (20) of a vehicle for transporting motor vehicles according to any one of the previous claims, **characterized in that** the second actuating means (26) have a first end connected to the moving part (12) and a second end connected to a first pulley support (19).

4. System (10) for lifting the loading platform (20) of a vehicle for transporting motor vehicles according to claim 3, **characterized in that** the chain (27) passes around the first pulley (22) connected to the first pulley support (19), and passes around the second pulley (23) connected to the moving part (12).

5. System (10) for lifting the loading platform (20) of a vehicle for transporting motor vehicles according to any one of the previous claims, **characterized in that** the second actuating means comprise a second hydraulic cylinder (26) having a first end connected to a second pulley support (29), in turn connected to the moving part (12), to which the second pulley (23) is rotatably connected, and a second end connected to the first pulley support (19), to which the first pulley (22) is rotatably connected.

6. System (10) for lifting the loading platform (20) of a vehicle for transporting motor vehicles according to claim 5, **characterized in that** the second pulley (23) is connected to the second hydraulic cylinder (26).

7. System (10) for lifting the loading platform (20) of a vehicle for transporting motor vehicles according to any one of the previous claims, **characterized in that** the loading platform (21) support is associated with the moving part (12) by means of a rack (24) adapted to allow the free rise of the loading platform support (21), and adapted to allow the descent of the loading platform support (21) with the actuation of an unlocking element for disengaging from the rack.

8. System (10) for lifting the loading platform (20) of a vehicle for transporting motor vehicles according to any one of claims 1 to 7, **characterized in that** it comprises a rope which replaces the chain (27).

9. System (10) for lifting the loading platform (20) of a vehicle for transporting motor vehicles according to any one of claims 1 to 8, **characterized in that** it comprises a rope applied to the loading platform support (21), synchronized with the chain (27) and adapted to act along the opposite direction to the one for lifting the loading platform (20), to oppose the vertical load in the situations in which the vertical load on the loading platform support (21) is reversed, tending to lift it.

10. Vehicle for transporting motor vehicles comprising at least two systems (10) for lifting the loading platform according to any one of the previous claims, placed at the two sides of the loading platform (20).

## Patentansprüche

1. Hebesystem (10) der Ladefläche (20) eines Fahrzeugs für den Transport von Fahrzeugen mit:
- einer Säule (15), die einen festen Teil (11) enthält, der mit einem Rahmen (14) verbunden ist, und einen beweglichen Teil (12), der gleitend an einem festen Teil (11) montiert ist und dazu dient, sich vertikal zu verschieben, der von den ersten Antriebsmitteln (16) angetrieben wird;
- einer Säulenhalterung (21), die mit der Ladefläche (20) verbunden werden kann, die genannte Säulenhalterung (21) ist gleitend auf dem beweglichen Teil (12) montiert und dient dazu, sich vertikal zu verschieben, die von den zweiten Antriebsmitteln (26) und von den dritten Antriebsmitteln (27) angetrieben wird, die mit den zweiten Antriebsmitteln (26) verbunden sind;
das **dadurch gekennzeichnet ist, dass** die dritten Antriebsmittel eine Kette (27) enthalten, die dazu dient, die Säulenhalterung (21) und die entsprechende erste (22) und zweite Riemenscheibe (23) anzutreiben.

2. Hebesystem (10) der Ladefläche (20) eines Fahrzeugs für den Transport von Fahrzeugen gemäß Patentanspruch 1, das **dadurch gekennzeichnet ist, dass** die dritten Antriebsmittel (27) ein erstes Ende haben, das mit der Säulenhalterung (21) verbunden ist, und ein zweites Ende, das mit dem beweglichen Teil (12) verbunden ist.

3. Hebesystem (10) der Ladefläche (20) eines Fahrzeugs für den Transport von Fahrzeugen gemäß einem beliebigen der vorhergehenden Patentansprüche, das **dadurch gekennzeichnet ist, dass** die zweiten Antriebsmittel (26) ein erstes Ende haben, das mit dem beweglichen Teil (12) verbunden ist, und ein zweites Ende, das mit einer ersten Säulenhalterung (19) verbunden ist.

4. Hebesystem (10) der Ladefläche (20) eines Fahrzeugs für den Transport von Fahrzeugen gemäß Patentanspruch 3, das **dadurch gekennzeichnet ist, dass** die Kette (27) um die erste Riemenscheibe (22) läuft, die mit der ersten Riemenscheibenhalterung (19) verbunden ist, und um die zweite Riemenscheibe (23) läuft, die mit dem beweglichen Teil (12) verbunden ist.

5. Hebesystem (10) der Ladefläche (20) eines Fahrzeugs für den Transport von Fahrzeugen gemäß einem beliebigen der vorhergehenden Patentansprüche, das **dadurch gekennzeichnet ist, dass** die genannten zweiten Antriebsmittel einen zweiten hydraulischen Zylinder (26) enthalten, der ein erstes Ende hat, das mit einer zweiten Riemenscheibenhalterung (29) verbunden ist, die ihrerseits mit dem beweglichen Teil (12) verbunden ist, mit dem drehbar die zweite Riemenscheibe (23) verbunden ist, und ein zweites Ende, das mit der ersten Riemenscheibenhalterung (19) verbunden ist, mit der drehbar die erste Riemenscheibe (22) verbunden ist.

6. Hebesystem (10) der Ladefläche (20) eines Fahrzeugs für den Transport von Fahrzeugen gemäß Patentanspruch 5, das **dadurch gekennzeichnet ist, dass** die zweite Riemenscheibe (23) mit dem zweiten hydraulischen Zylinder (26) verbunden ist.

7. Hebesystem (10) der Ladefläche (20) eines Fahrzeugs für den Transport von Fahrzeugen gemäß einem beliebigen der vorhergehenden Patentansprüche, das **dadurch gekennzeichnet ist, dass** die Halterung der Ladefläche (21) mit dem beweglichen Teil (12) durch eine Zahnstange (24) verbunden ist, die dazu dient, die freie Aufwärtsfahrt der Halterung der Ladefläche (21) zu ermöglichen, und die dazu dient, die Abwärtsfahrt der Halterung der Ladefläche (21) mit dem Antrieb eines Freigabesystems der Zahnstange zu ermöglichen.

8. Hebesystem (10) der Ladefläche (20) eines Fahrzeugs für den Transport von Fahrzeugen gemäß einem beliebigen der Patentansprüche 1 bis 7, das **dadurch gekennzeichnet ist, dass** es ein Seil enthält, das die Kette (27) ersetzt.

9. Hebesystem (10) der Ladefläche (20) eines Fahrzeugs für den Transport von Fahrzeugen gemäß einem beliebigen der Patentansprüche 1 bis 8, das **dadurch gekennzeichnet ist, dass** es ein Seil enthält, das an der Halterung der Ladefläche (21) angebracht ist, welches mit der Kette (27) synchronisiert ist und dazu dient, in der entgegengesetzten Richtung zum Heben der Ladefläche (20) zu wirken, um in den Situationen der vertikalen Last entgegenzuwirken, in denen sich die vertikale Last auf der Halterung der Ladefläche (21) umkehrt und dazu tendiert, diese zu heben.

10. Fahrzeug für den Transport von Fahrzeugen, das mindestens zwei Hebesysteme (10) der Ladefläche gemäß einem beliebigen der vorhergehenden Patentansprüche enthält, die an den beiden Seiten der Ladefläche (20) angebracht sind.

## Revendications

1. Système (10) de levage de la plateforme (20) d'un véhicule pour le transport de véhicules automobiles comprenant :
- une colonne (15) comprenant une partie fixe (11) reliée à un châssis (14) et une partie mobile (12) qui glisse sur la partie fixe (11) et se déplace verticalement grâce aux premiers moyens d'entraînement (16) ;
- un support de plateforme (21) relié à la plateforme (20) qui glisse sur la partie mobile (12) et se déplace verticalement grâce aux seconds moyens d'entraînement (26) et aux troisièmes moyens d'entraînement (27) associés aux seconds moyens d'entraînement (26) ;
**caractérisé en ce que** les troisièmes moyens d'entraînement comprennent une chaîne (27) apte à actionner le support de plateforme (21) ainsi que la première poulie (22) et la seconde poulie (23) relatives.

2. Système (10) de levage de la plateforme (20) d'un véhicule pour le transport de véhicules automobiles, selon la revendication 1, **caractérisé en ce que** les troisièmes moyens d'entraînement (27) ont une première extrémité reliée au support de plateforme (21) et une seconde extrémité reliée à la partie mobile (12).

3. Système (10) de levage de la plateforme (20) d'un véhicule pour le transport de véhicules automobiles, selon l'une des revendications précédentes, **caractérisé en ce que** les seconds moyens d'entraînement (26) ont une première extrémité reliée à la partie mobile (12) et une seconde extrémité reliée à un premier support de poulie (19).

4. Système (10) de levage de la plateforme (20) d'un véhicule pour le transport de véhicules automobiles, selon la revendication 3, **caractérisé en ce que** la chaîne (27) passe autour d'une première poulie (22) reliée au premier support de poulie (19), et passe autour d'une seconde poulie (23) reliée à la partie mobile (12).

5. Système (10) de levage de la plateforme (20) d'un véhicule pour le transport de véhicules automobiles, selon l'une des revendications précédentes, **caractérisé en ce que** les seconds moyens d'entraînement comprennent un vérin hydraulique (26) dont la première extrémité est reliée à un second support de poulie (29) - qui est relié à son tour à la partie mobile (12) à laquelle la seconde poulie (23) est reliée par l'intermédiaire de roues - et dont la seconde extrémité est reliée au premier support de poulie (19) auquel la première poulie (22) est reliée par l'intermédiaire de roues.

6. Système (10) de levage de la plateforme (20) d'un véhicule pour le transport de véhicules automobiles, selon la revendication 5, **caractérisé en ce que** la seconde poulie (23) est reliée au second vérin hydraulique (26).

7. Système (10) de levage de la plateforme (20) d'un véhicule pour le transport de véhicules automobiles, selon l'une des revendications précédentes, **caractérisé en ce que** le support de plateforme (21) est associé à la partie mobile (12) par l'intermédiaire d'une crémaillère (24) apte à permettre au support de plateforme (21) de monter et descendre librement avec l'actionnement d'un élément de déblocage de la crémaillère.

8. Système (10) de levage de la plateforme (20) d'un véhicule pour le transport de véhicules automobiles, selon l'une des revendications de 1 à 7, **caractérisé en ce qu'**il comprend un câble au lieu de la chaîne (27).

9. Système (10) de levage de la plateforme (20) d'un véhicule pour le transport de véhicules automobiles, selon l'une des revendications de 1 à 8, **caractérisé en ce qu'**il comprend un câble appliqué au support de plateforme (21), synchronisé avec la chaîne (27) et apte à agir dans la direction opposée à celle de levage de la plateforme (20), pour s'opposer à la charge verticale dans les situations où la charge verticale sur le support de plateforme (21) s'invertit et tend à se soulever.

10. Véhicule pour le transport de véhicules automobiles comprenant au moins deux systèmes (10) de levage de la plateforme selon l'une des revendications précédentes situés des deux côtés de la plateforme (20).
